# EUROPEAN PATENT SPECIFICATION

(11) **EP 3 054 819 B1**
(45) Date of publication and mention of the grant of the patent: **12.02.2020**
(21) Application number: 14790675.4
(22) Date of filing: 09.10.2014
(51) Int. Cl.: A47J 19/02, B02C 18/30

(54) **PASTA MAKING ATTACHMENT TO A MULTI-PURPOSE KITCHEN MACHINE**
NUDELHERSTELLUNGSAUFSATZ EINER MEHRZWECKKÜCHENMASCHINE
ACCESSOIRE DE FABRICATION DE PÂTES POUR ROBOT MÉNAGER MULTIFONCTIONS

(30) Priority: 09.10.2013 GB 201317838
(43) Date of publication of application: 17.08.2016
(73) Proprietor: Kenwood Limited, Havant, Hampshire PO9 2NH (GB)
(72) Inventor: VACHER, Daniel, Hampshire PO9 2NH (GB)
(74) Representative: Hector, Annabel Mary
(86) International application number: PCT/GB2014/053039
(87) International publication number: WO 2015/052521

(56) References cited:
- EP-A2- 0 074 203
- WO-A1-94/15511
- FR-A- 944 642

## Description

This invention relates to a pasta-making attachment for a multi-purpose kitchen machine, such as a food mixer or a food processor.

Multi-purpose kitchen machines, such as those mentioned above, are typically provided with a number of drive outlets designed to power attachments for performing various tasks. The drives provided at the various outlets operate at driving speeds and torques appropriate for the tasks to be performed by the attachments they are intended to power, thereby selectively conditioning the machine to perform chosen tasks.

One such attachment which is known for use with multi-purpose kitchen machines comprises a pasta-making attachment which includes a housing containing an extruder, intended to be driven by a predetermined drive outlet of a multi-purpose kitchen machine, and a pasta die, formed with one or more apertures intended to impart a predetermined shape to pasta material extruded therethrough. The die is replaceable, and a range of dies may be provided to produce differently shaped pastas.

The housing, which is configured for connection to a drive outlet capable of driving the extruder at an appropriate speed and with the necessary torque, includes or is coupled to a hopper device through which the pasta ingredients can be fed to a scroll-like extruder, which is driven in rotation by the chosen drive outlet of the multi-purpose kitchen machine to force the pasta ingredients through the apertures in the pasta die. By this means, the pasta is extruded from the attachment in strands of a desired shape, determined by the die configuration.

It is usual for another attachment to comprise a meat grinder, consisting of a generally similar arrangement to the above-described pasta making attachment, but utilising a different scroll-like extruder and differently configured dies.

WO94/15511A1 discloses a kitchen machine having changeable fittings which in separate operations allows for pasta extrusion and meat mincing to be performed. EP0074203A2 discloses a food extruding machine which can be used to make pasta or fill sausage casings. FR944642A discloses a kitchen machine which can be used for grinding meat and making pasta.

It is an object of this invention to provide a pasta making attachment by economical means and according to the invention there is provided, for a multi-purpose kitchen machine, a pasta making attachment as defined in claim 1.

Further details are described in the dependent claims.

It should also be appreciated that particular combinations of the various features described and defined in any aspects of the invention can be implemented and/or supplied and/or used independently within the scope of the invention as defined by the appended claims.

In order that the invention may be clearly understood and readily carried into effect, one embodiment thereof will now be described, by way of example only, with reference to the accompanying drawings, of which:
Figure 1 shows, in exploded and perspective view, an attachment in accordance with one embodiment of the invention set up as a meat-grinder;

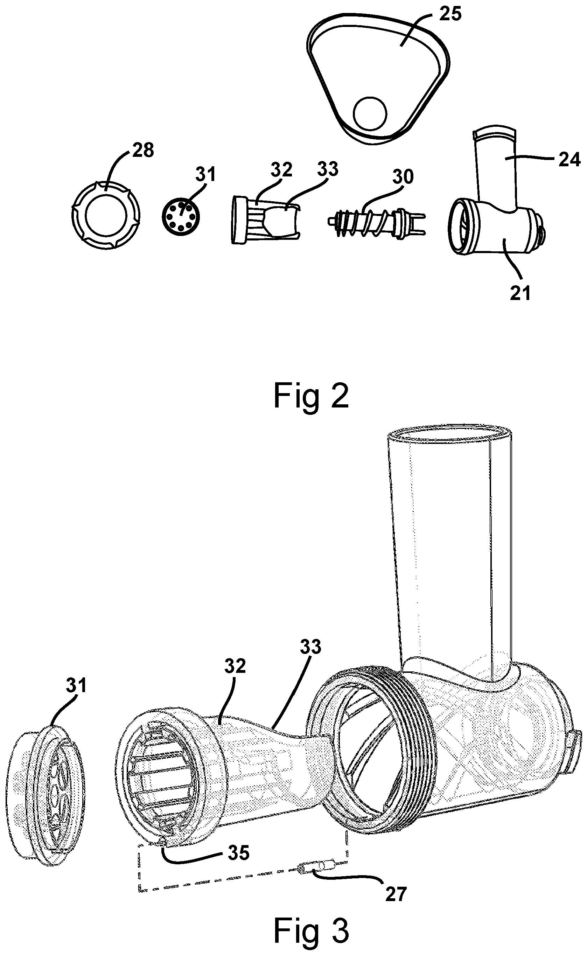

Figure 2 shows, in exploded view, the components of the attachment required for pasta-making; and
Figure 3 shows an enlarged view of certain components of the pasta-maker.

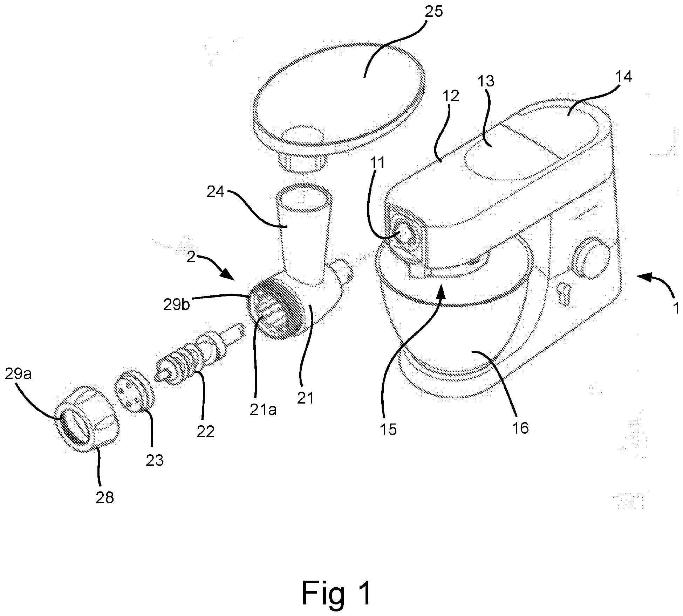

Referring now to Figure 1, a multi-purpose kitchen machine comprising a stand mixer of a kind manufactured and sold by the applicants is shown at 1. The invention, of course, can be used with many different kinds of multi-purpose kitchen machine and the appliance of Figure 1 is shown by way of example only.

The machine 1 presents a relatively low-speed, high torque rotary drive outlet 11 at the front of a head portion 12 thereof; the drive outlet 11 being normally concealed, when not in use, behind a removable trim panel (not shown). Other drive outlets having different characteristics (e.g. speed, torque and/or fixture configuration) are provided, in this example, behind trim panels 13 and 14 on the upper surface of the head 12, and on the underside of the head 12, as indicated by the arrow 15; this latter outlet being typically a planetary drive outlet for a beater or mixer tool which is suspended for use into a bowl 16. Other outlets may be provided instead of, or in addition to, those just described.

It will be appreciated that the drive outlet 11 presents a rotary drive executed about a horizontal drive axis, and this is convenient for use with attachments 2 such as meat grinders, by means of which meat is ground and extruded to emerge forwardly from the attachment through an apertured die, and is allowed to fall into a bowl or other receptacle placed beneath the outlet formed by the die.

The attachment 2 is a dedicated meat-grinding attachment and comprises a generally tubular, hollow housing 21 provided at one end thereof with a fixture complementary to that presented by the outlet 11, enabling the housing 21 of the attachment 2 to be releasably secured to the machine 1, enabling a scroll-like screw extruder device 22 to be rotated by the rotary driver provided at the outlet 11. The device 22 is mounted for rotation within a processing cavity 21a in the housing 21, so as to extrude forwardly, and through a die 23, meat and associated products introduced into the processing cavity in the interior of the housing 21 by way of a feed-tube 24 from a hopper 25. It will be appreciated that, depending upon considerations such as packaging requirements, the feed-tube 24 may be integrally formed with or separate from the housing 21, and likewise the hopper 25 may be integrally formed with or separate from the feed-tube 24.

Typically, several dies such as 23 are provided, each formed with a respective array of apertures, and a die 23, selected to suit the required texture or another characteristic of the ground meat, is fitted to the housing 21.

The extruder device 22 and the die 23 are retained within the housing 21 by means of a nut 28 which is internally threaded as at 29a to screw onto an external threading 29b formed on the forwardly-facing end of the housing 21. Nut 28 may be knurled or otherwise treated to facilitate its turning to fasten the aforementioned components properly in place within the housing 21. Bearing in mind the stresses and strains that can be imparted to various components during extrusion of relatively viscous materials and the heat that can be developed thereby, however, it is often preferred to form the nut 28 with external driving indentations or protrusions designed to be engaged either by a dedicated spanner or by a general purpose spanner (neither shown), to facilitate loosening of the nut 28 from the housing 21.

If desired, a pusher device (not shown) of any convenient design may be provided to enable a user to push pasta-making ingredients through the feed tube 24, to encourage their engagement with the extruder device 22.

It is known, for example from GB-A-2415657, that similar arrangements to the above can be provided for pasta making, but these attachments are dedicated devices, usually supplied separately from the appliance 1, which itself may be sold with or without a meat-grinding attachment such as 2.

In accordance with this invention, advantage is taken of the similarities between the meat-grinding and pasta-making attachments to provide both attachments in an economical form.

Accordingly, given that the meat-grinding attachment is (a) the more common and (b) requires the larger processing cavity 21a, this example of the invention sets out to permit a pasta-making attachment to share several costly components of the meat-grinding attachment. To this end, the pasta-making attachment can share the main housing 21 and the hopper 25 and feed-tube 24, together with all coupling fitments for securing the main housing to the appliance 1 and for securing extrusion dies to the main housing 21. A user simply needs, in principle, to replace the meat-grinding scroll-like extruder 22 with an extruder 30 of generally similar form but designed for pasta-making, and to replace the die 23 with a pasta-making die 31 selected from several such dies provided.

However, in order for the pasta-making scroll extruder 30 to work efficiently in the relatively large processing cavity 21a of the housing 21, it has been found necessary to introduce a further component in the form of a tubular, size-reducing, conversion device 32 provided to surround the pasta extruder 30 and thereby adapt it to the dimensions of the processing cavity 21a in the housing 21. Alternatively viewed, it can be regarded that the conversion device 32 is effective to condition the cavity 21a for operation with the pasta extruder scroll 30.

The device 32 is provided with a cut-out 33 to permit the pasta ingredients, inserted into the hopper 25 and entering the cavity 21a via the feed-tube 24, to reach the extruder 30 for processing. The device 32 is further provided with an orientation feature, to ensure that it is placed into the cavity in the correct manner, with the cut-out 33 aligned with the outlet of the feed-tube 24. In this example, that feature comprises an axial receiving slot 35 located and dimensioned to accommodate a pin-like component 27 that already exists in the cavity 21a. It will be appreciated, however, that any form of keying or alignment may be used to ensure that the device 32 is fitted into the cavity 21a with the correct orientation.

As mentioned, several alternative pasta-making dies 31 are included in a pack for selective usage; each configured to impose, upon pasta extruded therethrough, a predetermined shaping; there being a number of classically accepted shapes for pasta. The construction and design of pasta dies such as 31 and extruder devices such as 30 are well established and do not form part of this invention. They are thus not described further herein, save to mention that a user selects a die appropriate to the type of pasta being prepared and secures it, by means of the nut 28, to the housing 21 before commencing a pasta-making operation, and that the central region of the inwardly-facing surface of the die 31 is typically indented to provide a location and/or bearing for the forward end of the extruder device 30; the rearward end of the extruder being configured (in the same way as the rearward end of the meat-grinding extruder 22) to accept the rotary drive presented at outlet 11.

In operation, therefore, a set of basic components can be conditioned, by the addition of further components, into a meat-grinding attachment or into a pasta-making attachment.

The attachment of this invention is thus in the nature of a kit of parts, selectively configurable into a meat grinder or a pasta maker drivable by a kitchen machine. The kit is based around a common component set which includes a hollow main body part, formed with a processing cavity within which a food processing tool can rotate when driven by the machine and a hopper for allowing foodstuffs to be introduced into the processing cavity. The main body part is connectable to the kitchen machine such that the food processing tool can be rotated by means of a drive outlet on the kitchen machine and moreover has a food output port and a fixing that permits a selected apertured extrusion die to be coupled to the food output port, allowing processed foodstuffs to be driven out of the food output port by way of the die.

The kit is characterised by the further provision of a first food processing tool set comprising a first scroll-like extruder screw tool, together with an associated set of dies, all adapted for use in meat grinding; and a second food processing tool set comprising a second scroll-like extruder screw tool together with an associated set of dies, all adapted for use in pasta making, and a tubular conversion device for insertion into the processing cavity to condition the cavity for operation with the second scroll-like extruder screw tool of the second food processing tool set.

The first and second tool sets are configured for alternative fitment to the common component set to convert the attachment from a meat-grinding attachment to a pasta making attachment, or vice versa.

If required, the kit of parts can further comprise a pasta cutting arrangement of the kind described in the aforementioned GB-A-2415657. Furthermore, the kit of parts may additionally comprise a set of ice-crushing dies of the kind described in our co-pending UK patent application no. 1317834.8 of even filing date herewith, for selection and use in place of the die 23.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A pasta-making attachment (2) for a multi-purpose kitchen machine (1), the attachment comprising components of a meat-grinding attachment including a hollow main body part (21) having a processing cavity (21a) therein within which a scroll-like extruder screw can rotate when driven by the machine, and a hopper (25) for allowing foodstuffs to be introduced into the processing cavity (21a); the pasta-making attachment further comprising a replacement scroll-like extruder screw (30) dedicated to pasta making, and replacement pasta-extrusion dies (31); the attachment (2) being **characterised by** the further provision of a tubular conversion device (32) for insertion into the processing cavity (21a) to condition said cavity (21a) for operation with said replacement scroll-like extruder screw (30) dedicated to pasta making.

2. An attachment according to claim 1, wherein the tubular conversion device (32) is configured to co-operate with alignment means (27) provided in said main body part (21) to affix said tubular conversion device (32) in a predetermined orientation with respect to the hopper (25).

3. A kit of parts for a kitchen machine; the kit of parts being selectively configurable into a meat grinder or a pasta maker, wherein the kit of parts comprises a common component set including:
(a) a hollow main body part having a processing cavity therein within which a food processing tool can rotate when driven by the machine;
(b) a hopper for allowing foodstuffs to be introduced into the processing cavity;
(c) first coupling means for coupling the main body part to cooperative receiving means on the kitchen machine such that said food processing tool can be driven in rotation by way of a drive outlet on the kitchen machine; and
(d) second coupling means for coupling a selected apertured extrusion die to an output port of said main body part such that processed foodstuffs can exit the attachment via the die;
the kit being **characterised by** the further provision of:
(e) a first food processing tool set comprising a food processing tool in the form of a first scroll-like extruder screw together with an associated set of dies all adapted for use in meat grinding; and
(f) a second food processing tool set comprising a pasta-making attachment as claimed in Claim 1 or Claim 2; wherein said first and second tool sets are configured for alternative fitment to said common component set to convert said attachment from a meat-grinding attachment to a pasta making attachment, or vice versa.

## Patentansprüche

1. Nudelherstellungsaufsatz (2) für eine Mehrzweckküchenmaschine (1), wobei der Aufsatz Folgendes umfasst: Komponenten eines Fleischwolfaufsatzes mit einem hohlen Hauptkörperteil (21), der einen Verarbeitungshohlraum (21a) darin aufweist,in dem sich eine spiralförmige Extruderschnecke drehen kann, wenn sie von der Maschine angetrieben wird, undeinen Trichter (25), um das Einführen von Nahrungsmitteln in den Verarbeitungshohlraum (21a) zu ermöglichen; wobei der Nudelherstellungsaufsatz ferner eine spiralförmige Ersatzextruderschnecke (30), die für die Nudelherstellung bestimmt ist, und Ersatznudelextrusionsdüsen (31) umfasst;
wobei der Aufsatz (2) **dadurch gekennzeichnet ist, dass** ferner eine rohrförmige Umwandlungsvorrichtung (32) zum Einsetzen in den Verarbeitungshohlraum (21a) vorgesehen ist,um den genannten Hohlraum (21a) für den Betrieb mit der genannten spiralförmigen Ersatzextruderschnecke (30) für die Herstellung von Nudeln vorzubereiten.

2. Aufsatz nach Anspruch 1, wobei die rohrförmige Umwandlungsvorrichtung (32) dafür konfiguriert ist, mit Ausrichtungsmitteln (27) zusammenzuwirken, die in dem genannten Hauptkörperteil (21) vorgesehen sind,um die genannte rohrförmige Umwandlungsvorrichtung (32) in einer vorbestimmten Ausrichtung in Bezug auf den Trichter (25) zu befestigen.

3. Teilesatz für eine Küchenmaschine; wobei der Teilesatz wahlweise zu einem Fleischwolf oder einem Nudelhersteller konfiguriert werden kann, wobei der Teilesatz einen gemeinsamen Komponentensatz umfasst, der Folgendes umfasst:
(a) einen hohlen Hauptkörperteil mit einem Verarbeitungshohlraum, in dem sich ein Lebensmittelverarbeitungswerkzeug drehen kann, wenn es von der Maschine angetrieben wird;
(b) einen Trichter, um das Einführen von Nahrungsmitteln in den Verarbeitungshohlraum zu ermöglichen;
(c) ein erstes Kopplungsmittel zum Koppeln des Hauptkörperteils mit kooperativen Aufnahmemitteln an der Küchenmaschine, so dass das genannte Lebensmittelverarbeitungswerkzeug über einen Antriebsauslass an der Küchenmaschine drehend antreibbar ist; und
(d) ein zweites Kopplungsmittel zum Koppeln einer ausgewählten Extrusionsdüse mit Öffnungen an eine Ausgangsöffnung des genannten Hauptkörperteils, so dass verarbeitete Lebensmittel aus dem Aufsatz über die Düse austreten können;
wobei der Teilesatz durch die weitere Bereitstellung von Folgendem gekennzeichnet ist:
(e) einem ersten Werkzeugsatz für die Lebensmittelverarbeitung, der ein Lebensmittelverarbeitungswerkzeug in Form einer ersten spiralförmigen Extruderschnecke zusammen mit einem zugehörigen Satz von Düsen umfasst, die alle zur Verwendung beim Fleischvermahlen ausgelegt sind; und
(f) einen zweiten Werkzeugsatz für die Lebensmittelverarbeitung, der einen Nudelherstellungsaufsatz nach Anspruch 1 oder 2 umfasst; wobei der genannte erste und zweite Werkzeugsatz zur alternativen Anpassung an den genannten gemeinsamen Komponentensatz konfiguriert sind,um den genannten Aufsatz von einem Fleischwolfaufsatz in einen Nudelherstellungsaufsatz umzuwandeln, oder umgekehrt.

## Revendications

1. Accessoire de fabrication de pâtes (2) pour un robot ménager multifonction (1), l'accessoire comprenant des composants d'un accessoire de hachage de viande incluant une partie de corps principal creux (21) ayant une cavité de transformation (21a) dans celle-ci au sein de laquelle une vis extrudeuse de type à volute peut tourner quand elle est entraînée par le robot, et une trémie (25) pour permettre que des aliments soient introduits dans la cavité de transformation (21a) ; l'accessoire de fabrication de pâtes comprenant en outre une vis extrudeuse de type à volute de remplacement (30) dédiée à la fabrication de pâtes, et des matrices d'extrusion de pâtes de remplacement (31) ; l'accessoire (2) étant **caractérisé par** la fourniture supplémentaire d'un dispositif de conversion tubulaire (32) destiné à être inséré jusque dans la cavité de transformation (21a) pour conditionner ladite cavité (21a) pour un fonctionnement avec ladite vis extrudeuse de type à volute de remplacement (30) dédiée à la fabrication de pâtes.

2. Accessoire selon la revendication 1, dans lequel le dispositif de conversion tubulaire (32) est configuré pour coopérer avec un moyen d'alignement (27) fourni dans ladite partie de corps principal (21) pour fixer ledit dispositif de conversion tubulaire (32) selon une orientation prédéterminée par rapport à la trémie (25).

3. Une trousse de pièces pour un robot ménager ; la trousse de pièces pouvant être configurée sélectivement en un hachoir à viande ou une machine à pâtes, la trousse de pièces comprenant un ensemble de composants communs incluant :
(a) une partie de corps principal creux ayant une cavité de transformation dans celle-ci au sein de laquelle un outil de transformation d'aliments peut tourner quand il est entraîné par la machine ;
(b) un hachoir destiné à permettre que des aliments soient introduits jusque dans la cavité de transformation ;
(c) un premier moyen de couplage destiné à coupler la partie de corps principal à un moyen de réception coopérant sur le robot ménager de sorte que ledit outil de transformation d'aliments peut être entraîné en rotation au moyen d'une sortie d'entraînement sur le robot ménager ; et
(d) un deuxième moyen de couplage destiné à coupler une matrice d'extrusion perforée sélectionnée à un orifice de sortie de ladite partie de corps principal de sorte que des aliments transformés peuvent sortir de l'accessoire par la matrice ;
la trousse étant **caractérisée par** la fourniture supplémentaire :
(e) d'un premier ensemble d'outils de transformation d'aliments comprenant un outil de transformation d'aliments sous la forme d'une première vis extrudeuse de type à volute conjointement avec un ensemble associé de matrices toutes conçues pour être utilisées dans le hachage de viande ; et
(f) d'un deuxième ensemble d'outils de transformation d'aliments comprenant un accessoire de fabrication de pâtes selon la revendication 1 ou la revendication 2 ; dans lequel lesdits premier et deuxième ensembles d'outils sont configurés pour une variante d'ajustement avec ledit ensemble de composants communs pour convertir ledit accessoire d'un accessoire de hachage de viande en un accessoire de fabrication de pâtes, ou inversement.
